(19) Europäisches Patentamt
European Patent Office
Office européen des brevets

(11) **EP 1 391 750 B1**

(12) **EUROPÄISCHE PATENTSCHRIFT**

(45) Veröffentlichungstag und Bekanntmachung des Hinweises auf die Patenterteilung:
**25.08.2010 Patentblatt 2010/34**

(51) Int Cl.:
*G01V 1/38* *(2006.01)*  *G01V 1/20* *(2006.01)*

(21) Anmeldenummer: **03014693.0**

(22) Anmeldetag: **27.06.2003**

(54) **Verfahren zur Schätzung der Antennengeometrie einer akustischen Linearantenne**

Method for estimating the geometry of an acoustic linear antenna.

Méthode d'estimation de la géometrie d'une antenne acoustique linéaire.

(84) Benannte Vertragsstaaten:
**AT BE BG CH CY CZ DE DK EE ES FI FR GB GR HU IE IT LI LU MC NL PT RO SE SI SK TR**

(30) Priorität: **17.08.2002 DE 10237761**

(43) Veröffentlichungstag der Anmeldung:
**25.02.2004 Patentblatt 2004/09**

(73) Patentinhaber: **ATLAS ELEKTRONIK GMBH**
**28305 Bremen (DE)**

(72) Erfinder:
• **Wicker, Kai, Dr.**
**28357 Bremen (DE)**

• **Jung, Oliver**
**28832 Achim (DE)**

(74) Vertreter: **Wasiljeff, Johannes M.B. et al**
**Jabbusch Siekmann & Wasiljeff**
**Patentanwälte**
**Otto-Lilienthal-Strasse 25**
**28199 Bremen (DE)**

(56) Entgegenhaltungen:
**EP-A- 0 790 506    DE-A- 3 034 953**
**DE-A- 3 537 759**

**Beschreibung**

Die Erfindung betrifft ein Verfahren zur Schätzung der Antennengeometrie einer akustischen Unterwasser-Linearantenne der im Oberbegriff des Anspruch 1 definierten Gattung.

Bei einem bekannten Verfahren dieser Art (Dr. M. A. Mansour "Array Shape Estimation And Target Tracking Using Genetic Algorithm", UDT) werden potentielle Strangformen einer im Wasser geschleppten Linearantenne im Suchraum durch eine n harmonische Reihe beschrieben gemäß:

$$y(x) = \sum_{n=1}^{N} a_n \sin(n\pi x / H) + b_n \cos(n\pi x / H),$$

wobei H=L+v·T, L die Länge der Linearantenne v die Schleppgeschwindigkeit und T die Beobachtungsperiode ist. Die Parameter der Strangform sind die Koeffizienten $a_n$, $b_n$. Bei der Anwendung des evolutionären oder genetischen Algorithmus auf diesen Strangformansatz wird zur Bewertung der Fitness der einzelnen Strangformen oder Individuen die Richtschärfe der Linearantenne herangezogen.

Mit diesem bekannten Verfahren wird die momentane Antennengeometrie nur dann ausreichend genau erfaßt, wenn die geschleppte Linearantenne infolge Dünung oder Seegang oder niedriger Schleppgeschwindigkeit nur Schwingungen um ihre gestreckte, linienförmige Ausrichtung ausführt. Werden dagegen von dem schleppenden Fahrzeug Manöver gefahren, beispielsweise eine Kursänderung von 90° durchgeführt, die zu einer vorübergehenden, bogenförmigen Krümmung der Schleppantenne führt, so werden innerhalb einer Zeitspanne, die mit Manöverbeginn einsetzt und zeitlich versetzt nach Manöverschluß endet, mit diesem Lösungsansatz keine brauchbaren, der tatsächlichen Antennengeometrie angenäherten Ergebnisse erzielt.

Bei einem bekannten Verfahren zur Verbesserung der Detektionsgenauigkeit einer geschleppten, akustischen Unterwasser-Linearantenne (DE 30 34 953 A1) werden zur Bildung der Richtcharakteristiken der Linearantenne in n Peilrichtungen in bekannter Weise die Empfangssignale der Hydrofone im akustischen Strang zeitrichtig verzögert und konphas aufaddiert. Die Verzögerungszeiten werden in bekannter Weise als Quotient aus dem Abstand des jeweiligen Hydrofons von einer quer zur Achse der Peilrichtung, das ist die Achse der maximalen Empfindlichkeit der Richtcharakteristik, ausgerichteten Bezugsgeraden, die vorzugsweise durch das erste oder letzte Hydrofon im akustischen Strang hindurchgeht, und der Schallgeschwindigkeit im Wasser berechnet. Zur Ortsbestimmung der einzelnen Hydrofone werden diese von einem Bezugspunkt aus gepeilt, und aus dem Peilwinkel und dem bekannten Abstand aufeinanderfolgender Hydrofone, der üblicherweise konstant ist, wird die relative Lage der Hydrofonorte zu dem Bezugspunkt berechnet. Die Hydrofone werden dabei vorübergehend als Peilsender oder Peilempfänger betrieben, und entsprechend wird ein Peilempfänger bzw. ein Peilsender am Bezugspunkt angeordnet.

Bei diesem Verfahren wird die Antennengeometrie, d.h. die Lage der einzelnen Hydrofone, während der Schleppfahrt auch bei Manövern des schleppenden Fahrzeugs, z.B. eines Schiffs, eines U-Boots oder eines Hubschraubers, recht genau erfaßt, so daß eine ununterbrochene Überwachung des befahrenen Seegebiets auf Ziele und eine Zieldetektion möglich sind. Allerdings muß zusätzlicher technischer Aufwand aufgrund der Installation von Peilsender oder Peilempfänger in Kauf genommen werden. Ein unerwünschter Nebeneffekt tritt bei diesem Verfahren dadurch auf, daß zum Peilen der Hydrofone Peilsignale aktiv ausgesendet werden müssen, wodurch eine Eigenverratswahrscheinlichkeit gegenüber passiv ortenden Dritten erhöht wird.

Der Erfindung liegt die Aufgabe zugrunde, ein Verfahren der eingangs genannten Art anzugeben, mit dem fortlaufend, insbesondere bei geschleppten Linearantennen auch während Fahrmanövern des Schleppfahrzeugs, eine recht gute Schätzung der tatsächlichen Antennengeometrie der Linearantenne sichergestellt wird.

Die Aufgabe ist erfindungsgemäß durch die Merkmale im Anspruch 1 gelöst.

Das erfindungsgemäße Verfahren hat den Vorteil, ohne zusätzliche Hardwareinstallation ausschließlich mit den zum Betreiben der Linearantenne bereits vorhandenen Komponenten und etwas vergrößerter Rechnerleistung die Antennengeometrie der Linearantenne zu jedem Zeitpunkt ausreichend genau zu bestimmen, so daß insbesondere ein die Linearantenne schleppendes Fahrzeug nicht gezwungen ist, aus Gründen der Überwachung des Seegebiets auf schallabstrahlende Ziele möglichst lange einen geradlinigen Kurs beizubehalten, sondern ungeachtet der ausgebrachten Linearantenne seinen Kurs aufgrund der üblicherweise gegebenen Umstände im Seegebiet bestimmen und dabei auch beliebige Fahrmanöver und Kursänderungen durchführen kann. Bei reinem Empfangsbetrieb zur passiven Überwachung des Seegebiets auf geräuschabstrahlende Ziele ist der Antrieb des schleppenden Fahrzeugs die einzige Geräuschquelle, die durch Dritte geortet werden kann. Da anders als bei dem eingangs beschriebenen Verfahren keine Peilung der Hydrofone durchgeführt wird, entfällt das Aussenden von Schallwellen, so daß einem Dritten keine zusätzliche Möglichkeit für eine Ortung und ggf. Klassifikation des Fahrzeugs angeboten wird.

Bei der Verwendung des erfindungsgemäßen Verfahrens zur Peilung von schallabstrahlenden Zielen wird ohne weitere Hilfsmittel eine Rechts-/Linksunterscheidung in der Peilung eines detektierten Ziels erhalten, d. h. festgestellt, ob das unter einem Peilwinkel >0° und <180° gepeilte Ziel auf der Steuer- oder Backbordseite liegt. Hierzu braucht in der Linearantenne nur eine kleine Krümmung vorzuliegen, die z.B. bei einer geschleppten Linearantenne durch ein kurzes Manöver des Schleppfahrzeugs mit vorübergehender Kursänderung herbeigeführt werden kann. Dies liegt darin begründet, daß im evolutionären oder genetischen Algorithmus gemäß einer bevorzugten Ausführungsform der Erfindung die Richtschärfe der Richtcharakteristiken der Gruppensignale als Zielfunktion verwendet und hierzu fortlaufend die Richtcharakteristiken der Strangformen gebildet werden. Da die jeweils ausgelesenen Strangformen mit der besten Fitness, d.h. den besten Richtschärfen, für die Generierung der Nachkommen einer weiteren Population, d.h. von verbesserten Strangformen, herangezogen werden, werden die Scheinziele bereits aufgrund der geringen Richtschärfe der entsprechenden Gruppensignale unterdrückt.

Bei einem stationären Einsatz der Linearantenne zum Überwachen eines Seegebiets werden durch das erfindungsgemäße Verfahren keine Anforderungen an das Auslegen der Linearantenne auf dem Gewässergrund gestellt. Die Linearantenne kann einfach auf den Gewässergrund abgesenkt und dort verankert werden. Eine Vermessung der Lage der Linearantenne zum Feststellen der Hydrofonorte kann entfallen, da durch den Einsatz des erfindungsgemäßen Verfahrens die Antennengeometrie sicher geschätzt wird.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß einer vorteilhaften Ausführungsform der Erfindung wird für den Betrag der Hydrofonwinkel nur kleine Winkelwerte zugelassen, für die der Sinus des Winkelwerts ungefähr gleich dem Winkelwert ist. Durch diese Beschränkung auf kleine Hydrofonwinkel, die beispielhaft nicht größer als $\pm$ 3° sind, wird bereits in der Initialsierungsphase des genetischen Algorithmus eine brauchbare Strangform erhalten, die der natürlichen Verformung des Strangs nachempfunden ist. Größere Hydrofonwinkel werden schon aus Gründen der Steifigkeit des Strangs weniger häufig vorkommen. Außerdem ergibt sich der Vorteil, daß durch die Festlegung kleiner Hydrofonwinkel der Fehler, der durch die Annahme entsteht, daß der Abstand zwischen zwei Hydrofonen eine gerade Strecke zwischen den beiden Hydrofonen bildet, tatsächlich aber ein Kreisbogen ist, vernachlässigt werden kann.

Gemäß einer vorteilhaften Ausführungsform der Erfindung wird eine Anfangspopulation mit Individuen, die teilweise unterschiedlich gekrümmte Strangformen und teilweise gestreckte Strangformen mit den Hydrofonwinkeln als Parameter aufweisen, innerhalb des vorgegebenen Suchraums erstellt. Die Krümmungen können im Falle der geschleppten Linearantenne möglichen, unterschiedlichen Kursänderungen des schleppenden Fahrzeugs angepaßt sein. Die Krümmungen können beim stationären Auslegen der Linearantenne der Topologie oder Bodenstruktur des Seegebiets angepaßt werden.

Gemäß einer vorteilhaften Ausführungsform der Erfindung wird die Anfangspopulation mit einer Zielfunktion bewertet, die durch die Richtschärfe der mit den einzelnen Individuen erzeugten Richtcharakteristiken der Schleppantenne gegeben ist. Entsprechend der erzielten Richtschärfe wird den Individuen eine Fitness zugewiesen. Entsprechend ihrer Fitness werden Individuen, die sog. Eltern, ausgewählt und mittels der Eltern unter Anwendung evolutionärer Operationen, die Rekombination und Mutation umfassen, Individuen, die sog. Nachkommen, produziert, die Nachkommen wieder durch die Zielfunktion bewertet und in die Population eingefügt. Damit entsteht eine neue Population mit verbesserten Individuen, also verbesserten Strangformen. Dieser Prozeß der Erstellung neuer Populationen wird wiederholt fortgesetzt, bis ein vorgegebenes Abbruchkriterium erfüllt ist. Das dann vorliegende beste Ergebnis ist der tatsächlichen Strangform der Schleppantenne optimal angenähert. Als Abbruchkriterium kann das Erreichen eines bestimmten Zielfunktionswerts, das Entwickeln einer vorgegebenen Anzahl von Generationen, das Verstreichen einer festgelegten Zeitspanne oder das Entwickeln einer Anzahl von Generationen ohne weiteren Fortschritt im Zielfunktionswert festgelegt werden.

Gemäß einer vorteilhaften Ausführungsform der Erfindung werden in die Anfangspopulation zusätzliche Individuen eingefügt, deren Strangformen aus hydrodynamischen Modellen gewonnen und durch den Hydrofonwinkel parametrisiert werden. Solche hydrodynamischen Modelle sind bekannt und berücksichtigen die Schleppgeschwindigkeit, den Kurs des die Linearantenne schleppenden Fahrzeugs sowie Umgebungsparameter, wie Strömung, Windrichtung, Drift und dgl.. Durch dieses Einfügen zusätzlicher Strangformen in den Suchraum in der Initialisierungsphase des genetischen Algorithmus kann die Rechenzeit bis zur Erzielung des Bestergebnisses stark verkürzt werden, da bereits die Ausgangsindividuen eine der tatsächlichen Strangform, wenn auch in weiten Grenzen, angenäherte Strangform besitzen.

Die Erfindung ist anhand eines in der Zeichnung illustrierten Ausführungsbeispiels im folgenden näher beschrieben. Es zeigen:

Fig. 1    ein Blockschaltbild einer Schaltungsanordnung zur Erläuterung des Verfahrens zur Schätzung der momentanen Antennengeometrie einer Linearantenne,

Fig. 2    ein Flußdiagramm eines in dem Verfahren eingesetzten evolutionären Algorithmus,

Fig. 3    eine Illustrierung der zur Parametrisierung der Strangformen verwendeten Hydrofonwinkel,

Fig. 4    eine schematische Darstellung von für die Initialisierung des evolutionären Algorithmus im Suchraum erstellen Strangformen,

Fig. 5    ein Diagramm der Fitness der besten Strangform über 200 Generationen während der Optimierung.

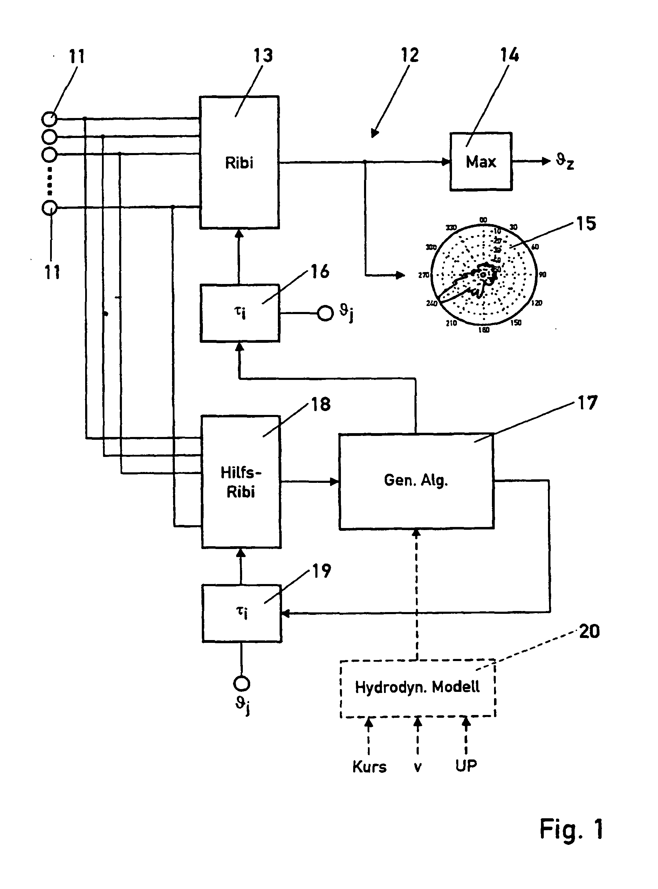

Eine von einem Fahrzeug, z.B. Oberflächenschiff, U-Boot, Hubschrauber u. dgl. geschleppte, akustische Unterwasser-Linearantenne, auch Schleppantenne genannt, weist in bekannter Weise eine Anzahl in einer Schleppkette hintereinander aufgereihter Hydrofone 11 auf, die in einem flexiblen Schlauch, dem sog. Strang, untergebracht und über elektrische Verbindungskabel mit einer an Bord des Fahrzeugs angeordneten Schaltungsanordnung, wie sie in Fig. 1 im Blockschaltbild dargestellt ist, elektrisch verbunden sind.

Die Schleppantenne ist über ein Zugkabel, in dem auch die Signalübertragungsleitungen verlaufen, mit dem Fahrzeug mechanisch verbunden und kann mittels einer auf dem Fahrzeug angeordneten Winde eingeholt bzw. ausgelegt werden. Zur Überwachung des Seegebiets auf schallabstrahlende Ziele und zur Detektion und Peilung dieser Ziele wird die ausgebrachte Schleppantenne in einem Abstand von einigen hundert Metern hinter dem Fahrzeug geschleppt.

Zur Peilung von Zielen sind die Hydrofone 11 mit einer Peilanlage 12 verbunden, in welcher anhand der elektrischen Ausgangssignale der Hydrofone 11, im folgenden Empfangssignale genannt, die Einfallsrichtung des Schalls und damit die Peilrichtung zu Zielen bestimmt wird. Die Peilanlage 12 umfaßt in bekannter Weise einen Richtungsbildner 13 und einen Pegelmaximumdetektor 14. Im Richtungsbildner 13 werden in bekannter Weise die Empfangssignale der Hydrofone 11 zeit- oder phasenverzögert, und zwar derart, daß unter Berücksichtigung des gewünschten Einfalls- oder Peilwinkels $\vartheta_j$ alle Empfangssignale der Hydrofone 11 konphas sind, und die konphasen Empfangssignale aufaddiert, so daß für j Peilrichtungen j Gruppensignale mit Richtcharakteristiken vorliegen, die in der Summe eine Empfangscharakteristik der Schleppantenne bilden. Der Pegelmaximumdetektor 14 ermittelt die größten Pegel und gibt die den größten Pegeln der Gruppensignale zugeordneten Peilwinkel als Zielpeilung $\vartheta_z$ aus. Zusätzlich können die Richtcharakteristiken in einem Display 15 dargestellt werden, wobei vorzugsweise die sog. Polarkoordinatendarstellung gewählt wird, in der der Pegel der überlagerten Gruppensignale der Richtcharakteristiken über dem Peilwinkel $\vartheta_j$ dargestellt ist.

Die erforderlichen Verzögerungszeiten $\tau_i$ werden in einem Verzögerungszeitrechner 16 in Abhängigkeit von einem diesem zugeführten Peuwinkel $\vartheta_j$ und der momentanen Antennengeometrie generiert. Eine solche sog. Laufzeitberechnung ist bekannt und beispielsweise in R. J. Urick "Principles of unterwater sound for engeneers", 1967; S. 40 beschrieben, so daß hierauf nicht näher eingegangen zu werden braucht. Prinzipiell werden die Verzögerungszeiten aus dem Abstand der Hydrofonorte von einer rechtwinklig zur jeweiligen Empfangs- oder Peilrichtung verlaufenden Geraden berechnet, indem dieser Abstand durch die Schallgeschwindigkeit im Wasser dividiert wird.

Die momentane Lage der Hydrofonorte zur Berechnung der Verzögerungszeiten werden mittels eines Verfahrens zur Schätzung der momentanen Antennengeometrie ermittelt, bei dem mit einem evolutionären oder genetischen Algorithmus die der tatsächlichen Antennengeometrie bestmöglichst angenäherte Strangform bestimmt wird. Die Strangform enthält als Stützstellen die einzelnen Hydrofonorte, so daß im Verzögerungszeitrechner 16 mit der geschätzten Strangform die Verzögerungszeiten für die j Empfangs- oder Peilrichtungen berechnet werden können.

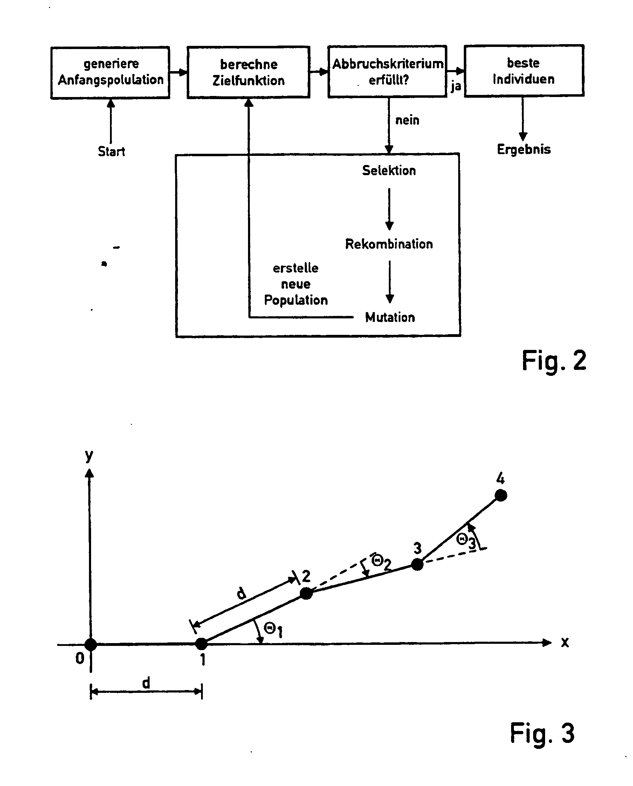

Der zur Schätzung der Antennengeometrie verwendete evolutionäre oder genetische Algorithmus ist bekannt und beispielsweise in Hartmut Pohlheim "Evolutionäre Algorithmen", Springer-Verlag Berlin Heidelberg 2000, Seite 7ff. beschrieben. Nur der Vollständigkeit halber ist der genetische Algorithmus in Fig. 2 im Flußdiagramm dargestellt. Er umfaßt die Phase der Initialisierung, in der neben der Parametrisierung vor allem die Erstellung der Anfangspopulation vorgenommen wird. Die erstellte Anfangspopulation wird durch die Zielfunktion bewertet und deren Individuen eine Fitness zugewiesen. Damit ist die Population der ersten Generation produziert. In der nächsten Phase wird eine neue Generation, die sog. Nachkommen, generiert, durch die Zielfunktion bewertet und in die Population der ersten Generation eingefügt, wobei Individuen durch Nachkommen ganz oder teilweise ersetzt werden. Damit beginnt der evolutionäre Kreislauf mit dem eine beliebige Anzahl von weiteren Populationen erstellt wird. Jedem Individuum einer Population wird entsprechend seines Zielfunktionswerts und im Vergleich zu allen anderen Individuen der Population eine Fitness zugewiesen. Entsprechend dieser Fitness werden Individuen, die sog.

Eltern, für die Produktion von neuen Individuen, den sog. Nachkommen ausgewählt (Selektion). Die Eltern produzieren unter Anwendung der evolutionären Operatoren Rekombination und Mutation die Nachkommen. Durch Rekombination werden dabei die Nachkommen erstellt und durch Mutation diese mit einer gewissen Wahrscheinlichkeit verändert. Die neuen Individuen werden wiederum durch die Zielfunktion bewertet und in die Population eingefügt, wobei Individuen der Population durch die Nachkommen ersetzt werden. Dieser Kreislauf wiederholt sich, bis ein Abbruchkriterium erfüllt ist. Als Abbruchkriterium wird das Entwickeln einer vorgegebenen Anzahl von Generationen oder das Erreichen eines bestimmten Zielfunktionswertes oder das Verstreichen einer festgelegten Zeitspanne oder das Entwikkeln einer Anzahl von Generationen ohne weiteren Fortschritt im Zielfunktionswert festgelegt. Mit Erreichen des Abbruchkriteriums wird das bezüglich seiner Fitness beste Individuum als Ergebnis ausgegeben.

Bei dem hier vorgestellten Schätzverfahren sind die Individuen Strangformen mit Hydrofonwinkeln $\Theta_i$ als Parameter, die bei der Mutation mit einer gewissen Wahrscheinlichkeit verändert werden. Dabei ist jeder einem Hydrofon 11 zugeordneter Hydrofonwinkel $\Theta_i$ auf die Position des vorausgehenden Hydrofons 11 bezogen. Die Parametrisierung der Strangform durch den Hydrofonwinkel $\Theta_i$ ist in Fig. 3 dargestellt, der auch die Definition des Hydrofonwinkels $\Theta_i$ entnommen werden kann. Der Hydrofonwinkel $\Theta_i$ ist demnach durch den Winkel bestimmt, der zwischen den Verbindungslinien eines jeden Hydrofons 11, beispielsweise des Hydrofons Nr. 3 in Fig. 3, zu dem vorausliegenden Hydrofon, in Fig. 3 dem Hydrofon Nr. 2, einerseits und dem nachfolgenden Hydrofon (11), in Fig. 3 dem Hydrofon Nr. 4, andererseits eingeschlossen wird.

Mit dieser Definition des Hydrofonwinkels $\Theta_i$ werden die Ortskoordinaten der i Hydrofone 11 in einem orthogonalen Koordinatensystem berechnet gemäß:

$$y_i = \sum_{n=0}^{i} \Delta y_n \qquad\qquad (1)$$

$$x_i = \sum_{n=0}^{i} \Delta x_n \qquad\qquad (2)$$

mit

$$\Delta y_i = d \cdot \sin \Theta_i \qquad\qquad (3)$$

$$\Delta x_i = d \cdot \cos \Theta_i \qquad\qquad (4)$$

und

$$\Theta_i = \sum_{n=1}^{i} \Theta_n \qquad\qquad (5),$$

wobei gilt: $\Delta x_0 = \Delta y_0 = 0$.

d ist der feste Abstand der Hydrofone 11 voneinander, der zwischen allen Hydrofonen 11 konstant ist. Der Hydrofonwinkel $\Theta_i$ weist einen Betrag und ein positives oder negatives Vorzeichen auf, je nachdem, ob das dem Hydrofon 11 mit den zugehörigen Hydrofonwinkel $\Theta_i$ nachgeordnete Hydrofon 11 auf der einen oder anderen Seite der verlängerten Verbindungslinie zwischen dem Hydrofon 11 und dem vorausliegenden Hydrofon 11 liegt. So hat in Fig. 3 der dem Hydrofon Nr. 2 zugeordneten Hydrofonwinkel $\Theta_2$ ein negatives und der dem Hydrofon Nr. 3 zugeordnete Hydrofonwinkel $\Theta_3$ ein positives Vorzeichen. Als Betrag für den Hydrofonwinkel $\Theta_i$ werden nur kleine Winkelwerte, typischerweise maximal 3°, zugelassen. Durch diesen kleinen Variationsbereich des Hydrofonwinkels $\Theta_i$ wird bereits eine Antennenform beschrieben, die sich in etwa in natürlicher Weise beim Schleppvorgang der Schleppantenne ergibt.

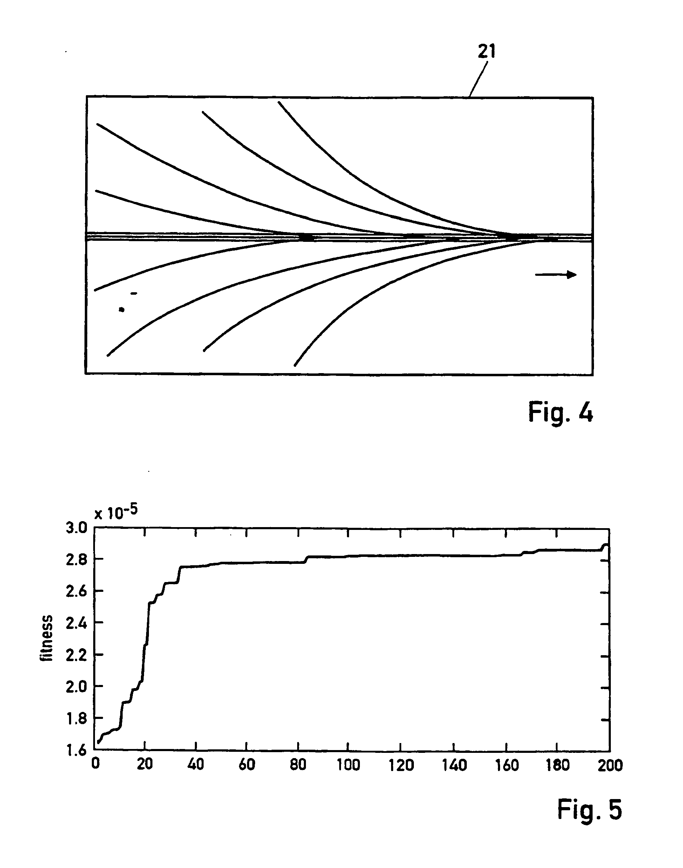

In der Initialisierungsphase des genetischen Algorithmus werden in einem Suchraum eine beliebige Zahl von Strangformen als Individuen der Anfangspopulation erstellt, und zwar durch die Berechnung der Koordinaten gemäß Gl.(1) bis Gl. (5), wobei der Hydrofonwinkel $\Theta_i$ (Gl. (5)) den Parameter darstellt. Beispiele für die Strangformen der Individuen der Anfangspopulation sind in Fig. 4 schematisch skizziert. Dabei ist eine Schlepprichtung angenommen, die in Fig. 4 von links nach rechts verläuft. Ein Teil der Individuen sind unterschiedlich gekrümmte Strangformen, ein Teil der Individuen gestreckte Strangformen. Die Anfangspopulation im Suchraum besteht beispielsweise aus fünfzig Individuen, von denen dreizehn Individuen unterschiedlich gekrümmte Formen und alle anderen Individuen eine gerade, also gestreckte Form aufweisen.

Als Zielfunktion zur Zuweisung der Fitness zu den einzelnen Individuen wird die Richtschärfe S der mit einer solchen Strangform erzielten Richtcharakteristik der Schleppantenne berechnet. Die Berechnung der Richtschärfe erfolgt gemäß

$$S = \int\limits_{f_{min}}^{f_{max}} \int\limits_{0}^{\pi} P^2(f, \vartheta_j)\, d\vartheta\, df \qquad\qquad (6),$$

wobei $P^2$ (f,$\vartheta$) das Leistungsspektrum in den Raumrichtungen mit den Einfallswinkeln $\vartheta_j$ als Funktion der Frequenz f ist. Hierzu ist ein Hilfs-Richtungsbildner 18 vorgesehen, dem in gleicher Weise wie dem Richtungsbilder 13 die Empfangssignale der Hydrofone 11 zugeführt werden. Im Hilfs-Richtungsbildner 18 werden in gleicher Weise wie bereits vorstehend beim Richtungsbildner 13 beschrieben die Empfangssignale zeitrichtig verzögert und die konphasen Empfangssignale zu den Gruppensignalen in den j Raumrichtungen aufaddiert. Die richtigen Verzögerungszeiten werden in einem Hilfs-Verzögerungszeitrechner 19 für jede Geometrie eines Individuum pro vorgegebenen Einfalls- oder Peilwinkel $\vartheta_j$ berechnet. Die Leistungen der im Hilfs-Richtungsbildner 18 generierten Gruppensignale werden dem Block 17 zur Berechnung des genetischen Algorithmus gemäß Fig. 2 zugeführt, in dem zunächst aus den Leistungen der Gruppensignale die Richtschärfe S eines jeden Individuums nach Gl.(6) berechnet wird.

Wie bereits erwähnt wird jeder Strangform aufgrund ihrer Richtschärfe eine Fitness zugewiesen und die Individuen mit der besten Fitness zur Erzeugung von Nachkommen ausgewählt (Selektion). Die Nachkommen werden mit der Richtschärfe als Zielfunktion bewertet, mit einer Fitnesszuweisung belegt und in die Population eingefügt, wodurch eine neue Population entsteht. Die Individuen der neuen Population mit der besten Fitness werden wieder selektiert und als Eltern zur Produktion von Nachkommen herangezogen. Dieser Kreislauf wird solange wiederholt, bis das Abbruchkriterium erfüllt ist. Beispielhaft wird als Abbruchkriterium die Erzeugung von insgesamt zweihundert Generationen oder Populationen festgelegt. In Fig. 5 ist der Verlauf der Fitness des jeweils besten Individuums einer Generation bzw. Population über insgesamt zweihundert Generationen dargestellt. Erkennbar ist, daß die Fitness sich nach vierzig Generationen nur noch hin und wieder in kleineren Schritten ändert, um schließlich bei einer größeren Zahl von Generationen zu konvergieren. Die Schnelligkeit der Konvergenz hängt natürlich von der Nähe der zur Initialisierung erstellten Strangform zu der tatsächlichen Strangform und von der Anzahl der Individuen der Anfangspopulation im Suchraum ab.

Die Konvergenz der Fitness kann beschleunigt werden, wenn die Anfangspopulation zusätzlich Individuen mit Strangformen enthält, die mittels hydrodynamischer Modelle generiert worden sind. Solche hydrodynamischen Modelle für die Strangform einer Schleppantenne sind bekannt. Sie berücksichtigen bei der Modellierung der Strangform die Schleppgeschwindigkeit v und den Kurs k des Schleppfahrzeuges sowie die Umgebungsparameter UP, wie Wasserströmungen, Windrichtung, Drift u.ä.. Die hydrodynamischen Modelle werden im Block 20 generiert und dem Block 17 zugeführt. Dort werden sie in der Initialisierungsphase mit einer Parametrisierung mit dem Hydrofonwinkel $\Theta_i$ in die Anfangspopulation eingefügt.

Mit Erfüllen des Abbruchkriteriums wird die das beste Ergebnis darstellende geometrische Strangform dem Verzögerungszeitrechner 16 der Peilanlage 12 zugeführt, der - wie beschrieben - mit dieser Antennenkonfiguration die Verzögerungszeiten für die Richtungsbildung pro Einfalls- oder Peilwinkel $\vartheta_j$ im Richtungsbildner 13 berechnet.

Das erfindungsgemäße Verfahren ist nicht auf die Anwendung bei einer geschleppten Unterwasser-Linearantenne beschränkt. Es kann mit gleich guten Ergebnissen auch bei stationär ausgelegten Unterwasser-Linearantennen eingesetzt werden, um die tatsächliche Lage der Hydrofone zu schätzen. Solche stationären Linearantennen werden zur Überwachung von Hafeneinfahrten und Schiffahrtsstraßen und -passagen in Küstennähe eingesetzt.

**Patentansprüche**

1. Verfahren zur Schätzung der Antennengeometrie einer akustischen Unterwasser-Linearantenne, die eine Mehrzahl von in einem Strang im gleichen Abstand hintereinander aufgereihten Hydrofonen (11) aufweist, bei dem mit einer Anzahl_von potentiellen, geometrischen Strangformen mittels eines evolutionären Algorithmus eine optimierte Strangform als momentane Antennengeometrie ermittelt wird, **dadurch gekennzeichnet, daß** die Strangform durch Hydrofonwinkel ($\Theta_i$) beschrieben wird, von denen jeder einem Hydrofon (11) zugeordnete Hydrofonwinkel ($\Theta_i$) auf die Position des vorausgehenden Hydrofons (11) bezogen wird.

2. Verfahren nach Anspruch 1, **dadurch gekennzeichnet, daß** der Hydrofonwinkel ($\Theta_i$) für jedes Hydrofon (11) von den Verbindungslinien des Hydrofons (11) zu dem vorausgehenden Hydrofon (11) einerseits und zu dem nachfolgenden Hydrofon (11) andererseits eingeschlossen wird.

3. Verfahren nach Anspruch 2, **dadurch gekennzeichnet, daß** der Hydrofonwinkel ($\Theta_i$) einen Betrag und ein positives oder negatives Vorzeichen aufweist, je nachdem, ob das dem Hydrofon (11) mit dem zugehörigen Hydrofonwinkel ($\Theta_i$) nachgeordnete Hydrofon (11) auf der einen oder anderen Seite der verlängerten Verbindungslinie zwischen dem Hydrofon (11) und dem vorausliegenden Hydrofon (11) liegt.

**4.** Verfahren nach einem der Ansprüche 1 - 3, **dadurch gekennzeichnet, daß** für den Betrag des Hydrofonwinkels ($\Theta_i$) Winkelwerte zugelassen werde, für die der Sinus des Winkelwerts etwa gleich dem Winkelwert ist.

**5.** Verfahren nach einem der Ansprüche 1 - 4, **dadurch gekennzeichnet, daß** mittels der Hydrofonwinkel ($\Theta_i$) die Ortskoordinaten der i Hydrofone (11) in einem orthogonalen Koordinatensystem gemäß

$$y_i \;=\; \sum_{n=0}^{i} \Delta y_n$$

$$x_i \;=\; \sum_{n=0}^{i} \Delta x_n$$

mit

$$\Delta y_i \;=\; d \cdot \sin \Theta_i$$

$$\Delta x_i \;=\; d \cdot \cos \Theta_i$$

und

$$\Theta_i \;=\; \sum_{n=1}^{i} \Theta_n \,,$$

berechnet wird, wobei d der Abstand der Hydrofone ist und $\Delta x_0 = \Delta y_0 = 0$ gilt, und daß durch die Ortskoordinaten ($x_i$, $y_i$) die Strangform festgelegt wird.

**6.** Verfahren nach Anspruch 5,
**dadurch gekennzeichnet, dass** bei der Anwendung des evolutionären Algorithmus auf die potentiellen, geometrischen Strangformen in einer Initialisierungsphase eine Anfangspopulation mit Individuen erstellt werden, wobei als Individuen von den potentiellen, geometrischen Strangformen mindestens zum Teil unterschiedliche Strangformen mit Hydrophonwinkeln als Parameter herangezogen werden,
dass die Anfangspopulation mit einer Zielfunktion bewertet wird, wobei als Zielfunktion die Richtschärfe, der Richtcharakteristiken der Unterwasser-Linearantenne, die mit den einzelnen Individuen erzeugt werden, herangezogen wird,
dass den Individuen eine ihrer Richtschärfe entsprechende Fitness zugewiesen wird,
dass entsprechend ihrer Fitness Individuen als Eltern ausgewählt werden,
dass mittels der Eltern unter Anwendung evolutionärer Operatoren neue Individuen als Nachkommen produziert werden,
dass die Nachkommen durch die Zielfunktion bewertet und in die Population unter Ersetzen vorhandener Individuen eingefügt werden und dadurch eine neue Population erstellt wird,
dass der Prozess der Erstellung weiterer neuer Populationen so lange wiederholt, bis ein Abbruchkriterium erfüllt ist, und
dass mit Erfüllen des Abbruchkriteriums das bezüglich seiner Fitness beste Individuum als optimierte Strangform der momentanen Antennengeometrie ausgegeben wird.

**7.** Verfahren nach Anspruch 6, **dadurch gekennzeichnet, daß** die Anfangspopulation Individuen für teilweise unterschiedlich gekrümmte und teilweise gestreckte Strangformen enthalten.

8. Verfahren nach Anspruch 6 oder 7, **dadurch gekennzeichnet, daß** als Abbruchkriterium eine Anzahl von generierten Populationen vorgegeben wird.

9. Verfahren nach einem der Ansprüche 6 - 8, **dadurch gekennzeichnet, daß** die Richtschärfe S gemäß

$$ S \;=\; \int\limits_{f_{min}}^{f_{max}} \int\limits_{0}^{\pi} P^2(f,\; \vartheta_j)\,d\vartheta\,df $$

berechnet wird, wobei $P^2(f,\vartheta)$ das Leistungsspektrum der Empfangssignale der Linearantenne in den Empfangsrichtungen ($\vartheta_j$) als Funktion der Frequenz f ist.

10. Verfahren nach einem der Ansprüche 6 - 9, **dadurch gekennzeichnet, daß** als evolutionäre Operatoren eine Rekombination zur Erzeugung der Nachkommen und eine Mutation der Nachkommen, bei der die Hydrofonwinkel ($\Theta_i$) mit einer gewissen Wahrscheinlichkeit verändert werden, eingesetzt werden.

11. Verfahren nach einem der Ansprüche 6 - 10, **dadurch gekennzeichnet, daß** in die Anfangspopulation zusätzliche Individuen mit aus hydrodynamischen Modellen gewonnenen Strangformen eingefügt werden.

12. Verfahren nach einem der Ansprüche 1 - 11,
**gekennzeichnet durch** seine Verwendung zur Peilung von Zielen, bei der die Empfangssignale der Hydrofone (11) zur Bildung einer Richtcharakteristik mit in Peilrichtung ($\vartheta_j$) weisender maximaler Empfangsempfindlichkeit in j Peilrichtungen jeweils zeitrichtig verzögert und konphas aufaddiert werden und die zeitrichtige Verzögerung aus dem Abstand der Hydrofone (11) von einer rechtwinklig zur Peilrichtung verlaufenden Gerade berechnet werden, indem die Hydrofonorte aus der geschätzten momentanen Antennengeometrie entnommen werden.

**Claims**

1. Method for estimating the antenna geometry of an acoustic underwater linear antenna which has a plurality of hydrophones (11) which are arranged one behind the other at the same distance apart in a strand, in which an optimized strand shape is determined as an instantaneous antenna geometry with a number of potential geometric strand shapes by means of an evolutionary algorithm, **characterized in that** the strand shape is described by the hydrophone angles ($\Theta_i$), of which each hydrophone angle ($\Theta_i$), which is associated with a hydrophone (11), is related to the position of the previous hydrophone (11).

2. Method according to Claim 1, **characterized in that** the hydrophone angle ($\Theta_i$) for each hydrophone (11) is included by the connecting lines of the hydrophone (11) to the previous hydrophone (11) on the one hand and to the subsequent hydrophone (11) on the other hand.

3. Method according to Claim 2, **characterized in that** the hydrophone angle ($\Theta_i$) has a magnitude and a positive or negative mathematical sign, depending on whether the hydrophone (11) which follows the hydrophone (11) when the associated hydrophone angle ($\Theta_i$) is on one side or the other side of the extended connecting line between the hydrophone (11) and the previous hydrophone (11).

4. Method according to one of Claims 1-3, **characterized in that** angle values are permissible for the magnitude of the hydrophone angle ($\Theta_i$) for which the sine of the angle value is about equal to the angle value.

5. Method according to one of Claims 1-4, **characterized in that** the position coordinates of the i hydrophones (11) is calculated by means of the hydrophone angles ($\Theta_i$) using an orthogonal coordinate system, based on:

$$y_i = \sum_{n=0}^{i} \Delta y_n$$

$$x_i = \sum_{n=0}^{i} \Delta x_n$$

where

$$\Delta y_i = d \cdot \sin \Theta_i$$

$$\Delta x_i = d \cdot \cos \Theta_i$$

and

$$\Theta_i = \sum_{n=1}^{i} \Theta_n,$$

where d is the distance between the hydrophones and $\Delta x_0 = \Delta y_0 = 0$ and **in that** the position coordinates $(x_i, y_i)$ define the strand shape.

6.  Method according to Claim 5,
    **characterized in that**, when the evolutionary algorithm is applied to the potential, geometry strand shapes in an initialization phase, an initial population is created with individuals, wherein at least partially different strand shapes with hydrophone angles as parameters are used as individuals of the potential, geometry strand shapes,
    **in that** the initial population is assessed using a target function, wherein the directivity index, of the direction characteristics of the underwater linear antenna which are produced by the individuals is used as the target function,
    **in that** the individuals are assigned a fitness which corresponds to their directivity index,
    **in that** individuals are selected as parents corresponding to their fitness,
    **in that** new individuals are produced as descendents by means of the parents using evolutionary operators,
    **in that** the descendents are assessed by the target function and are introduced into the population, replacing existing individuals, thus creating a new population,
    **in that** the process of creating further new populations is repeated until a termination criterion is satisfied, and
    **in that**, when the termination criterion is satisfied, the individual with the best fitness is output as the optimized strand shape of the instantaneous antenna geometry.

7.  Method according to Claim 6, **characterized in that** the initial population contains individuals for partially differently curved and partially stretched strand shapes.

8.  Method according to Claim 6 or 7, **characterized in that** a number of generated populations is predetermined as the termination criterion.

9.  Method according to one of Claims 6-8, **characterized in that** the directivity index S is calculated using

$$S = \int\limits_{f_{\min}}^{f_{\max}} \int\limits_{0}^{\pi} P^2(f, \vartheta_j) d\vartheta df$$

where $P^2(f,\vartheta)$ is the power spectrum of the received signals of the linear antenna in the receiving directions ($\vartheta_j$) as a function of the frequency f.

10. Method according to one of Claims 6-9, **characterized in that** a recombination for producing the descendents, and a mutation of all the descendents, in which the hydrophone angles ($\Theta_i$) are changed with a certain probability, are used as evolutionary operators.

11. Method according to one of Claims 6-10, **characterized in that** additional individuals are inserted into the initial population, with strand shapes obtained from hydrodynamic models.

12. Method according to one of Claims 1-11, **characterized by** use of the method for finding the bearing of targets, in which the received signals of the hydrophones (11) are each delayed for the correct time in order to form a direction characteristic with a maximum reception sensitivity, pointing in the bearing direction ($\vartheta_j$), in j bearing directions, and are added in-phase, and the correct time delay is calculated from the distance of the hydrophones (11) from a straight line which runs at right angles to the bearing direction, by taking the hydrophone locations from the estimated instantaneous antenna geometry.

**Revendications**

1. Procédé d'évaluation de la forme géométrique d'antenne d'une antenne linéaire sous-marine acoustique qui présente une pluralité d'hydrophones (11) alignés les uns derrière les autres à la même distance dans un cordon, selon lequel une forme de cordon optimisée est déterminée en tant que forme géométrique d'antenne momentanée au moyen d'un algorithme évolutif avec un certain nombre de formes de cordon géométriques potentielles, **caractérisé en ce que** la forme de cordon est décrite par des angles d'hydrophone ($\Theta_i$) parmi lesquels chaque angle d'hydrophone ($\Theta_i$) associé à un hydrophone (11) se réfère à la position de l'hydrophone (11) précédent.

2. Procédé selon la revendication 1, **caractérisé en ce que** l'angle d'hydrophone ($\Theta_i$) de chaque hydrophone (11) est délimité par les lignes de liaison de l'hydrophone (11) avec l'hydrophone (11) précédent d'un côté et avec l'hydrophone (11) suivant de l'autre côté.

3. Procédé selon la revendication 2, **caractérisé en ce que** l'angle d'hydrophone ($\Theta_i$) présente une valeur absolue et un signe positif ou négatif suivant que l'hydrophone (11) qui est disposé après l'hydrophone (11) avec l'angle d'hydrophone ($\Theta_i$) associé se trouve d'un côté ou de l'autre de la ligne de liaison prolongée entre l'hydrophone (11) et l'hydrophone (11) précédent.

4. Procédé selon l'une des revendications 1 à 3, **caractérisé en ce que** les valeurs angulaires autorisées pour la valeur absolue de l'angle d'hydrophone ($\Theta_i$) sont celles pour lesquelles le sinus de la valeur angulaire est à peu près égal à la valeur angulaire.

5. Procédé selon l'une des revendications 1 à 4, **caractérisé en ce que** les coordonnées des positions des i hydrophones (11) sont calculées dans un système de coordonnées orthogonal au moyen de l'angle d'hydrophone ($\Theta_i$) conformément à

$$y_i = \sum_{n=0}^{i} \Delta y_n$$

$$x_i = \sum_{n=0}^{i} \Delta x_n$$

avec

$$\Delta y_i = d \, . \, \sin\Theta_i$$

$$\Delta x_i = d \, . \, \cos\Theta_i$$

et

$$\Theta_i = \sum_{n=1}^{i} \Theta_n,$$

d désignant l'écart entre les hydrophones et $\Delta x_0 = \Delta y_0 = 0$, et que la forme de cordon est définie par les coordonnées des positions $(x_i, y_i)$.

**6.** Procédé selon la revendication 5, **caractérisé en ce que** lors de l'application de l'algorithme évolutif sur les formes de cordon géométriques potentielles dans une phase d'initialisation, il se crée une population de départ avec des individus, les individus de formes de cordon géométriques potentielles utilisés étant au moins en partie des formes de cordon différentes avec les angles d'hydrophone en tant que paramètres,
que la population de départ est évaluée avec une fonction de cible, la fonction de cible utilisée étant l'acuité directionnelle, les caractéristiques directionnelles de l'antenne linéaire sous-marine qui sont produites avec chacun des individus,
qu'une aptitude correspondant à leur acuité directionnelle est affectée aux individus,
que des individus sont sélectionnés en tant que parents en fonction de leur aptitude,
que de nouveaux individus sont produits en tant que successeurs au moyen des parents et en utilisant des opérateurs évolutifs,
que les successeurs sont évalués par la fonction de cible et introduits dans la population par remplacement des individus présents en créant ainsi une nouvelle population,
que le processus de production de nouvelles populations est répété jusqu'à ce qu'un critère d'interruption soit rempli et que lorsque le critère d'interruption est rempli, l'individu qui est le meilleur du point de vue de son aptitude est délivré en tant que forme de cordon optimisée de la forme géométrique momentanée de l'antenne.

**7.** Procédé selon la revendication 6, **caractérisé en ce que** la population de départ contient des individus pour des formes de cordon en partie aux courbures différentes et en partie étirées.

**8.** Procédé selon la revendication 6 ou 7, **caractérisé en ce que** le critère d'interruption prédéfini est une quantité de populations générées.

**9.** Procédé selon l'une des revendications 6 à 8, **caractérisé en ce que** l'acuité directionnelle S est calculée conformément à

$$S = \int_{f_{\min}}^{f_{\max}} \int_{0}^{\pi} P^2(f, \vartheta_j) d\vartheta df$$

$P^2(f, \vartheta)$ désignant le spectre de puissance des signaux reçus de l'antenne linéaire dans les directions de réception $(\vartheta_j)$ en fonction de la fréquence f.

**10.** Procédé selon l'une des revendications 6 à 9, **caractérisé en ce que** les opérateurs évolutifs utilisés sont une recombinaison pour générer les successeurs et une mutation des successeurs avec laquelle les angles d'hydrophone ($\Theta_i$) sont modifiés avec une certaine probabilité.

**11.** Procédé selon l'une des revendications 6 à 10, **caractérisé en ce que** des individus supplémentaires ayant des formes de cordon obtenues à partir de modèles hydrodynamiques sont introduits dans la population de départ.

**12.** Procédé selon l'une des revendications 1 à 11, **caractérisé par** son utilisation pour le relèvement de cibles lors duquel les signaux reçus des hydrophones (11) sont à chaque fois retardés de manière synchrone et additionnés en phase dans j directions de relèvement afin de former une caractéristique directionnelle avec une sensibilité de réception maximale orientée dans la direction de relèvement ($\vartheta_j$) et le retardement synchrone est calculé à partir de l'espacement des hydrophones (11) d'une droite qui s'étend perpendiculairement à la direction du relèvement en prélevant l'emplacement des hydrophones de la forme géométrique d'antenne momentanément estimée.

Fig. 1

Fig. 2

Fig. 3

21

**Fig. 4**

**Fig. 5**

**IN DER BESCHREIBUNG AUFGEFÜHRTE DOKUMENTE**

**In der Beschreibung aufgeführte Patentdokumente**

- DE 3034953 A1